# EUROPÄISCHE PATENTSCHRIFT

(11) **EP 0 794 845 B1**
(45) Veröffentlichungstag und Bekanntmachung des Hinweises auf die Patenterteilung: **24.07.2002**
(21) Anmeldenummer: 96943009.9
(22) Anmeldetag: 28.09.1996
(51) Int. Cl.: B23B 29/034, B23B 41/04

(54) **VERFAHREN UND VORRICHTUNG ZUR HERSTELLUNG VON WERKSTÜCKEN MIT UNRUNDEN INNEN-ODER AUSSENKONTUREN**
PROCESS AND DEVICE FOR MANUFACTURING WORKPIECES WITH NON-CIRCULAR INNER OR OUTER CONTOURS
PROCEDE ET DISPOSITIF DE FABRICATION DE PIECES PRESENTANT DES CONTOURS INTERIEURS OU EXTERIEURS NON ARRONDIS

(30) Priorität: 28.09.1995 DE 19536160
(43) Veröffentlichungstag der Anmeldung: 17.09.1997
(60) Teilanmeldung: 00108694.1
(73) Patentinhaber: Hörmansdörfer, Gerd, D-31303 Burgdorf (DE)
(72) Erfinder: HÖRMANSDÖRFER, Gerd, D-31303 Burgdorf (DE); LEY, Hans, D-53804 Much (DE); WESTERTEICHER, Wolfgang, D-33719 Bielefeld (DE)
(86) Internationale Anmeldenummer: DE9601865
(87) Internationale Veröffentlichungsnummer: WO9711807

(56) Entgegenhaltungen:
- DE-A- 3 305 298
- US-A- 4 648 295

## Beschreibung

Die Erfindung betrifft ein spezielles Verfahren und eine entsprechende Vorrichtung zur vorzugsweise spanenden Herstellung von Werkstücken mit unrunden Innen- und/oder Außenkonturen mit den Merkmalen des Oberbegriffs der Ansprüche 1 bzw. 2 (siehe DE 32 22 991). Unrunde Konturen wie z.B. Vierkante, Sechskante, Ovale, Ellipsen oder Polygone in Bohrungen oder an Zapfen werden in der Technik für die verschiedensten Anwendungen und in den unterschiedlichsten Geometrien benötigt. Allgemein bekannt und verbreitet sind z.B. Innensechskante in den Köpfen von Schrauben. Für die Massenherstellung solcher Schrauben kommen lediglich Umformverfahren, wie z.B. das Kalt- oder Warmfließpressen in Frage, weil solche Verfahren gut brauchbare Oberflächen bei niedrigsten Stückkosten erzielen. Anders sieht es aus, wenn kleinere Stückzahlen benötigt werden, oder wenn das jeweilige Bauteil ein derartiges Umformverfahren nicht zuläßt. Vor allem im allgemeinen Maschinenbau besteht Bedarf an den unterschiedlichsten Formbohrungen bzw. Außenkonturen an spanend herzustellenden Bauteilen. Hier wird in Bezug auf Formbohrungen gewöhnlich auf das Räumen oder Stoßen zurückgegriffen, in manchem Fall auch auf das Erodieren, oder das Formbohren mittels Schablone, während für die Herstellung von Außenkonturen gewöhnlich eine frästechnische Herstellung in Frage kommt.

Beim Räumen oder Stoßen von Formbohrungen, auch beim Pendelräumen, ist im allgemeinen von einer mehr oder weniger stark gerieften Oberfläche der Formbohrung auszugehen. Die Maßhaltigkeit einer derart hergestellten Bohrung ist mäßig. Bei höherfesten Werkstoffen tritt ein erhöhter Verschleiß der Räumnadel auf. Zusätzlich besteht bei Sackbohrungen der Nachteil des Auftretens von eingerollten Drückspänen.

Das Erodieren von Formbohrungen führt zu hervorragenden Ergebnissen, sogar in gehärteten Werkstoffen. Jedoch ist der Zeitaufwand für diese Herstellung sehr hoch, so daß dieses Verfahren für die meisten Fälle aus Kostengründen ausscheidet.

Andererseits ist ein Apparat zur rotativ spanenden Herstellung von Formbohrungen bekannt, welcher von der Firma VIKA AG in Trimbach/Schweiz hergestellt und unter dem Namen VIKA-Polybor vertrieben wird. Dieser Apparat besteht im wesentlichen aus einem speziellen Bohrer, welcher mittels eines Pendelhalters in eine Maschinenspindel einspannbar ist und welcher während des Bohrvorgangs mittels einer über dem Werkstück anzuordnenden gehärteten Schablone mit der jeweils gewünschten Kontur geführt wird. Die Funktion des genannten Geräts ist jedoch derart mangelhaft, daß seine Anwendung sehr begrenzt sein dürfte. Ein wesentlicher Nachteil des Apparats ist die Tatsache, daß bereits aus geometrischen Gründen der mehrkantige Bohrer keine eindeutige Bahn innerhalb der Schablone beschreibt, so daß die hergestellte Kontur in wechselhafter Weise von der Kontur der Schablone abweicht. Durch das schlagende Rotieren der äußeren Bohrerkanten innerhalb der Schablone werden die Kanten mit der Zeit derart verrundet, daß bei einem stirnseitigen Nachschliff des Bohrers die Innenmaße der herzustellenden Bohrung kleiner werden und der Bohrer noch mehr in der Schablone herumschlägt. Der aus HSS hergestellte Bohrer ist nicht nur in der Anschaffung teuer und schwer nachzuschleifen, sondern besitzt auch eine ausgesprochen ungünstige Schneidkantengeometrie. Eine Montage von auswechselbaren Schneidplatten ist nicht möglich. Nachteilig ist ferner, daß vor Bohrbeginn die Schablone oberhalb des Werkstücks montiert, und der Bohrer zuerst bei stehender Spindel in die Schablone eingeführt werden muß, sodaß sich daraus eine ausgesprochen umständliche Arbeitsweise ergibt, welche z.B. auf einer automatisch arbeitenden Maschine nicht durchführbar ist.

In Bezug auf die spanende Herstellung von Außenkonturen bestehen heute eine Reihe von technischen Möglichkeiten, von denen das Fräsen wohl die naheliegendste sein dürfte. Allerdings ist beim Fräsen bekanntlich von einer geringeren Zerspanungsleistung pro Zeiteinheit im Vergleich zum Drehen auszugehen. Auch hier sind Spezialgeräte, z.B. sogenannte Mehrkantfräsgeräte, bekannt, welche auf Fräsmaschinen recht gute Ergebnisse zeigen. Derartige Mehrkantfräsgeräte lassen jedoch nicht die Herstellung gerundeter Konturen wie z.B. Ellipsen oder Gleichdicke zu, und sind z.B. auch nicht auf einer CNC-Drehmaschine mit Werkzeugantrieb verwendbar.

Aus der EP-PS 0 513 322 ist ein Formbohr- bzw. Formdrehgerät bekannt, welches für die spanende Herstellung einer großen Zahl der unterschiedlichsten Innen- und Außenkonturen verwendbar ist. Dieses Gerät hat den Vorteil, daß es sowohl auf Dreh- als auch Fräsmaschinen, ja sogar auf Säulenbohrmaschinen aufrüstbar ist, wobei lediglich die Erfordernis eines rotativen Antriebs des Gerätes selbst besteht. Daher sind auch größere Werkstücke mit höherem Gewicht, welche z.B. fest auf dem Arbeitstisch einer Fräsmaschine aufgespannt werden müssen, problemlos bearbeitbar. Es kann ferner auf Drehmaschinen zum Einsatz kommen, welche weder über eine mechanische noch elektronische Verkopplung zwischen Spindel- und Werkzeugantrieb, sondern lediglich über die Möglichkeit des Spindelhalts verfügen. Andererseits ist es bei diesem Gerät nachteilig, daß für jede andere geometrische Form und auch Größe ein anderer Kurvenscheibensatz erforderlich ist, woraus erhöhte Investitionskosten und ein entsprechender Zeitaufwand für die Umrüstung resultieren. Nachteilig ist ferner, daß ohne externe Verstellung der Schneide weder eine Schnittaufteilung noch eine Kalibrierung der Kontur zu verwirklichen ist.

Daneben sind aus der Europäischen Patentschrift 0 097 346 zwei prinzipielle Verfahren und verschiedene Vorrichtungen für die spanende Herstellung derartiger Konturen bekannt. Bei dem einen der vorgeschlagenen Verfahren rotieren Werkstück als auch Werkzeug mit voneinander unterschiedlichen Drehzahlen auf einer Kreisbahn, wobei die Drehachse des Werkzeugs exzentrisch gegen die Drehachse des Werkstücks versetzt ist. Dabei wird mittels einer speziellen ungleichmäßig übersetzenden Getriebestufe die Rotationsgeschwindigkeit des Werkzeugs derart beeinflußt, daß sich aus der Relativbewegung zwischen Werkzeug und Werkstück die gewünschte unrunde Kontur ergibt. Dazu wird mittels eines bestimmten gegenseitigen radialen Achsabstands zwischen Werkstück und Werkzeug die Durchmesserdifferenz zwischen In- und Umkreis der Kontur fest eingestellt, ebenso wie aus dem Drehzahlverhältnis der rotierenden Partner die Eckenzahl festgelegt wird. Damit ist jedoch der schwerwiegende Nachteil verbunden, daß die gesamte Kontur in einem einzigen Schnitt hergestellt werden muß. Wenn nämlich die Werkzeugeinheit radial relativ zum Werkstück verstellt werden würde, würde dies lediglich zu einer stärkeren Ausspitzung bzw. Verrundung der Kontur führen, sodaß eine Feineinstellung des Durchmessers oder eine Aufteilung in mehrere Schnitte auf diesem Wege nicht möglich ist. Daraus ergeben sich partiell sehr breite Späne, weshalb bei diesem Verfahren nicht nur ein häufiger Schneidenbruch des Werkzeugs, sondern auch eine unsaubere Bearbeitungsfläche hingenommen werden muß. Darüberhinaus ist es erforderlich, für jede andere Abmessung der Kontur die Schneidenspitze neu einzustellen, bzw. den Werkzeughalter oder die Bohrstange mit dem Drehmeißel zu tauschen, um das exakte Kragmaß einzuhalten.

Bei dem zweiten mit gleicher Patentschrift vorgeschlagenen Verfahren wird ebenfalls das Werkstück rotiert, das Werkzeug jedoch ohne eigene Rotation mit seiner Spitze auf einer außerhalb der Werkstückmitte liegenden Kreisbahn bewegt, wobei der Durchmesser dieser Kreisbahn der Radiusdifferenz zwischen In- und Umkreis der Kontur entspricht. Auch hier wird durch die Verwendung ungleichmäßig übersetzender Getriebestufen eine Variation der Umlaufgeschwindigkeit des Werkzeugs ermöglicht, um die Relativbewegung zwischen Werkstück und Werkzeug so festzulegen, daß sich bei der Bearbeitung die angestrebte Kontur ergibt. Wie zuvor ist dabei mittels einer Getriebestufe bezüglich der Eckenzahl der Kontur ein bestimmtes Übersetzungsverhältnis festlegbar, welches in diesem Fall das zahlenmäßige Verhältnis zwischen Werkstückrotation und Werkzeugumlauf betrifft. Die komplette Kinematik des vorgeschlagenen Systems zur Erzeugung der Werkzeugbewegung und der erforderlichen Synchronisation zwischen Werkstückrotation und Werkzeugumlauf besteht aus starr aufgebauten Wellen, Zahnrädern, Kupplungen und dergleichen, wobei diese Bauteile untereinander und gegen das Maschinenbett mechanisch fest verkoppelt sind. Eine Möglichkeit zur radialen Verschiebung des Getriebesystems ist den relevanten Zeichnungsfiguren nicht zu entnehmen. In der Beschreibung des Verfahrens wird präzisiert, daß das Werkzeug während des gesamten Umlaufs am Werkstück angreift, sodaß in diesem Falle auch hier eine Schnittaufteilung und Kalibrierung bei der Herstellung der Kontur nicht gegeben ist.

Die mit der genannten Schrift vorgeschlagenen Vorrichtungen zur Ausführung des letzteren Verfahrens sind relativ aufwendig und bedingen eine bestimmte Baugröße, wodurch sie praktisch nur in Gestalt einer Sondermaschine realisierbar sind. Bedeutend vielseitiger wäre jedoch eine Bauausführung in Gestalt einer kompakten und auf eine Maschine, z.B. eine Drehmaschine, aufrüstbaren Werkzeugeinheit. In dieser Hinsicht ist die komplexe Gestaltung des vorgeschlagenen ungleichmäßig übersetzenden Getriebes sicherlich ein Hemmschuh. Nachteilig sind ferner die für die sogenannte Momentenstütze des Schwingkopfes an der Maschine vorgeschlagenen technischen Lösungen. Die Ausführung mit den gezeigten Parallellenkern erlaubt keine definierte winkelmäßige Lage des Schwingkopfes, wie sie für eine ordnungsgemäße Funktion erforderlich wäre. Die Ausführung mit Schwenkarm und Linearführung ist nicht praktikabel, weil die von einem Kreis abweichende Bahn der Werkzeugschneide eine Profilverzerrung der Kontur bewirkt und den Schnittwinkel der Werkzeugschneide beeinflußt. Außerdem sind die in der Schrift vorgeschlagenen Momentenstützen nicht in der Lage, die bei der Zerspanung anfallenden Axialkräfte aufzunehmen.

Das größte Handicap der genannten Gestaltungsvorschläge liegt in den zu beschleunigenden Massen. Diese wären einerseits hoch, andererseits aufgrund ihrer seitlichen Lage und ihrer auszuführenden Bewegung nicht ausgeglichen. Wegen ihres Gewichts und der Tatsache, daß ihre Umlauffrequenz je nach Eckenzahl der herzustellenden Kontur ein vielfaches der Spindeldrehzahl mit dem Werkstück betragen müßte, würden sie die Drehzahl des Werkstücks derart limitieren, daß in der Mehrzahl der Fälle eine akzeptable Schnittgeschwindigkeit nicht erreicht werden könnte. Würde beispielsweise für die Herstellung eines kleineren Sechskants eine Spindeldrehzahl von 1000 min⁻¹ für eine adäquate Schnittgeschwindigkeit benötigt, so müßte die Umlaufdrehzahl genau 6000 min⁻¹ betragen, ein Wert der mit den in der Anmeldung vorgeschlagenen praktischen Ausführungen niemals realisierbar wäre. Diese Drehzahlen würden in Verbindung mit den hohen unausgeglichenen, linear zu beschleunigenden Massen mindestens zum Aufschaukeln des Systems und damit zu Rattermarken am Werkstück führen, bevor es zu Extremverschleiß oder gar zur Zerstörung der ganzen Einheit kommen würde.

Es bestand daher die Aufgabe zur Schaffung eines verbesserten Verfahrens und einer verbesserten Vorrichtung für die vorzugsweise spanende Herstellung der eingangs anhand von Beispielen genannten Konturen an Werkstücken bei erhöhten Anforderungen an die Sauberkeit der Oberfläche und die Maßhaltigkeit der Kontur, ohne die oben beschriebenen Nachteile. Dabei sollte eine derartige Vorrichtung außerordentlich wirtschaftlich arbeiten und vorzugsweise als kompaktes angetriebenes Werkzeug auf Maschinen, vor allem auf handelsüblichen CNC-Drehmaschinen aufrüstbar sein.

Die beschriebene Aufgabe wird nach der Erfindung durch die Zurverfügungstellung eines erweiterten Verfahrens gemäß Anspruch 1, bzw. verbesserter Vorrichtungen gemäß den Ansprüchen 2 bis 20 gelöst.

Das verbesserte Verfahren baut auf dem oben als zweitem aus der Europäischen Patentanmeldung EP 0 097 346 beschriebenen Verfahren auf, wobei dieses dahingehend erweitert wird, daß die Umlaufachse des selbst nicht rotierenden Werkzeugs in radialer Richtung maschinenseitig mit feiner Auflösung verstellbar ist. Gleichzeitig wird dabei die starre mechanische Kopplung zwischen der Spindel- und der Werkzeugrotation durch eine frei programmierbare Synchronisation ersetzt.

Danach wird das Werkstück in einem mit konstanter Winkelgeschwindigkeit rotierenden Futter z.B. einer CNC-Drehmaschine aufgenommen. Die Drehzahl dieses Futters wird unter Heranziehung elektrischer und/oder elektronischer Mittel, wahlweise unter Hinzuziehung mechanischer Mittel, auf ein bestimmtes Verhältnis zur Umlauffrequenz des Werkzeugs (z.B. der Schneidenspitze eines Drehmeißels) eingestellt. Dieses Verhältnis ergibt sich aus der Zahl der sich in der Abwicklung der Kontur wiederholenden Zyklen. Dabei besitzt z.B. ein Exzenter nur einen derartigen Zyklus, eine Ellipse zwei solcher Zyklen, ein Polygon (sogenanntes Gleichdick) drei, ein Vierkant vier, bzw. ein Sechskant sechs. Entsprechend beträgt das Verhältnis von Futterdrehzahl zu Schwing- bzw. Taumelkopffrequenz 1:1, 1:2, 1:3, 1:4, bzw. 1:6. Bei der Werkstückbearbeitung wird das Werkzeug ohne eigene Rotation auf einer Kreislinie bewegt und dabei axial gegen das Werkstück verfahren, woraus z.B. für die Spitze des Werkzeugs eine Raumkurve in Form einer Schraubenlinie resultiert. Dabei muß die Drehrichtung des Futters bei der Fertigung der genannten Konturen mit dem Umlaufsinn der Schneide am Taumel- bzw. Schwingkopf immer übereinstimmen, gleichgültig ob eine Innen- oder Außenbearbeitung durchgeführt wird. Eine gegensinnige Bewegungsrichtung ermöglicht die Herstellung exotischer, blumenartiger Konturen, für welche allerdings nur ein geringer Bedarf bestehen dürfte.

Mit der Erfindung wird vorgeschlagen, den eigentlichen Bearbeitungsvorgang, wobei vorzugsweise eine Zerspanung ins Auge gefaßt ist, mittels eines sogenannten Abspanzyklus abzuarbeiten. Hierbei werden die zuvor beschriebenen schraubenlinienförmigen Raumkurven der Werkzeugschneide nach jedem Schnitt jeweils mit dem Betrag einer gegen das jeweilige Werkstück gerichteten Zustellung maschinenseitig radial gegeneinander verschoben so lange wiederholt, bis das gewünschte Fertigmaß erreicht ist.

Soll mit dem beschriebenen Verfahren eine exzentrisch liegende runde Bohrung oder ein exzentrisch liegender runder Zapfen, bzw. eine Ellipse oder ein entsprechender Polygon bearbeitet werden, so wird dabei das Werkzeug mit gleichbleibender Umlaufgeschwindigkeit in einem entsprechend zur Drehzahl des Futters mit dem Werkstück stehenden Verhältnis bewegt. Bei der Herstellung von Exzentern entspricht dabei der Radius des Umlaufkreises des Werkzeugs der Exzentrizität des Zapfens bzw. der Bohrung, während deren eigener Durchmesser mittels einer radialen Verschiebung der Rotationsachse des Werkzeugs sehr genau herstellbar ist.

Für die Herstellung unstet sich ändernder Konturen, wie den genannten Vielecken, ist es erforderlich, die Umlaufgeschwindigkeit des Werkzeugs bzw. seiner Spitze so zu variieren, daß trotz der immer auf einer exakten Kreisbahn befindlichen Position des Werkzeugs zwischen Werkstück und Werkzeug eine Relativbewegung gebildet ist, welche im Ergebnis zu der am Werkstück zu fertigenden Kontur führt.

Mit der Erfindung werden gleichzeitig Vorrichtungen zur Ausführung der oben beschriebenen Verfahren zur Verfügung gestellt. Diese besonders kompakten Vorrichtungen sind als zusätzliche Werkzeugeinheiten bzw. Ergänzungssätze zur Aufrüstung vorhandener Maschinen vorgesehen, insbesondere als angetriebenes Werkzeug für die Benutzung auf dem Revolver einer CNC-Drehmaschine.

Die kompakte Bauform der vorgeschlagenen Vorrichtung wird erst dadurch realisierbar, daß das Antriebssystem mindestens mit den wesentlichen für die Werkzeugauslenkungen erforderlichen Bauteilen im Prinzip koaxial zur Achse der Werkzeugaufnahme angeordnet ist. Daraus ergeben sich geringe zu beschleunigende Massen mit kurzen Hebelarmen, wobei diese Massen außerdem mit wesentlichen Anteilen mehr oder weniger kompensiert sind. Nur damit sind die benötigten hohen Antriebsdrehzahlen realisierbar. Ein weiterer Vorteil der koaxialen Anordnung liegt in der vereinfachten Einbeziehung einer die axialen Kräfte aufnehmenden Lagerung, wofür Wälzlagerungen vorgeschlagen werden. Daneben entfällt bei der erfindungsgemäßen Vorrichtung die starre mechanische Kopplung zwischen der Maschinenspindel und dem Werkzeug. Der Antrieb der gesamten Vorrichtung wird nämlich durch einen separaten Motor (z.B. Elektromotor) bewerkstelligt, wobei die Art der Kopplung sehr flexibel über das CNC-Programm wähl- und einstellbar ist.

Die vorgeschlagenen Werkzeugeinheiten besitzen eine Werkzeugaufnahme, welche zur Aufnahme des Werkzeughalters in Gestalt z.B. einer Bohrstange mit einer Wendeschneidplatte dient. Die Werkzeugaufnahme ist wahlweise z.B. mittels eines Kreuzschiebers, einer kardanischen Aufhängung oder in einer hohlen Exzenterspindel z.B. über eine Oldham-Kupplung verdrehfest gegen das Werkzeuggehäuse so abgestützt, daß einerseits ihre winkelmäßige Relativbewegung gegenüber dem Gehäuse unterbunden ist, sie andererseits jedoch so bewegbar ist, daß die Schneidspitze eines Werkzeugs (z.B. einer in eine Bohrstange eingesetzten Wendeschneidplatte) in ihrer radialen Position bzw. im wesentlichen radialen Position auslenkbar ist. Die Werkzeugaufnahme wird dann im Betrieb mittels eines Antriebs so bewegt, daß die Werkzeugspitze ohne eigene Rotation eine geschlossene Kreisbahn beschreibt.

Der Durchmesser der von der Werkzeugspitze beschriebenen Kreisbahn ist von dem kleinsten und größten Radialmaß der zu fertigenden Kontur abhängig und muß daher einstellbar sein, wenn mit der gleichen Werkzeugeinheit verschiedene Konturgrößen hergestellt werden sollen. Mit der Erfindung wird vorgeschlagen, die Verstellung wahlweise über eine radiale Verschiebung eines der Werkzeugaufnahme zugeordneten Drehlagers oder über die gegenphasige Verdrehung zweier Exzenterhülsen zu bewerkstelligen. Die Einstellung ist z.B. mittels einer Stellschraube, eines Schneckentriebs, einer Differentialschraube oder eines Zahnradtriebs aus Kegelrädern oder aus Stirnrad und Kronenrädern realisierbar. Dabei kann der Verstellgrad durch eine Skalierung auf den sich bewegenden Bauteilen leicht abgelesen werden.

Der Antrieb des Werkzeughalters kann in der einfachsten Version direkt mit dem Werkzeugantrieb der entsprechenden Werkzeugposition z.B. auf dem Revolver einer Drehmaschine gekoppelt sein. Das zur Herstellung einer bestimmten Kontur erforderliche Verhältnis zwischen der Drehzahl des Futters mit dem Werkstück und der Schwing- bzw. Taumelfrequenz der Werkzeugaufnahme ist dann einfach per NC-Programm festlegbar. Eine Variante besteht darin, für beide Antriebe die gleiche Drehzahl zu programmieren und zur Erzielung eines bestimmten Übersetzungsverhältnisses eine Getriebestufe im Werkzeuggehäuse heranzuziehen. In jedem dieser beiden Fälle ist eine entsprechende elektronische Synchronisationsmöglichkeit seitens der Maschine bzw. der Steuerung zwingend erforderlich. Mit dem Werkzeug in der hier beschriebenen Ausführung sind Exzenter, Ellipsen und bestimmte Polygone (sogenannte Gleichdicke) herstellbar.

Für die Herstellung kantiger bzw. anderer von den vorgenannten Konturen abweichenden Formen wird vorgeschlagen, dem Werkzeuggehäuse zusätzlich ein ungleichmäßig übersetzendes Getriebe zuzuordnen, womit durch eine angepaßte Änderung der Bahngeschwindigkeit des Werkzeugs und seiner Schneide die erforderliche Relativbewegung zum Werkstück erzeugbar ist. Ein derartiges Getriebe ist relativ einfach z.B. unter Verwendung von zwei unrunden komplementären Zahnrädern realisierbar.

Für bestimmte eckige Konturen ergeben sich für die unrunden Zahnradsätze Wälzkurven mit Kardioiden ähnelnder Gestalt. Diese besitzen mindestens einen Kurvenabschnitt mit unstetem Verlauf, welcher für die Umsetzung in komplentäre Zahnradpaare kaum geeignet ist. Hier wird nun vorgeschlagen, den spitzen Kurvenabschnitt durch einen kleinen Radius zu ersetzen, welcher mit tangentialen Übergängen in die beiden Schenkel der Wälzkurve einmündet. Durch diese Abwandlung werden in den Eckbereichen der am Werkstück gefertigten Kontur kleine Verrundungen erzielt, wie sie ohnhin angestrebt sind. Die gebildeten Verrundungen sind zwar keine sauberen Radien, jedoch ist ihre genaue Form für die Funktion der Bearbeitungsflächen im Prinzip unbedeutend.

In einer Weiterbildung der Erfindung wird vorgeschlagen, die unrunden Komplementärzahnräder als sogenannte Doppelschraubgetriebe auszuführen. Doppelschraubgetriebe sind Stirnradgetriebe, die jedoch gegenüber herkömmlichen Stirnradgetrieben einen Schrägungswinkel von ca. 80° aufweisen, so daß die Räder nur einen Zahn besitzen können - ähnlich einer eingängigen Schraube. Doppelschraubgetriebe mit unrunden Rädern sind bisher nicht bekannt geworden. Sie haben den Vorteil, daß sie bezüglich der Wälzkurven die Realisierung von Kurven mit erheblichen Unstetigkeiten erlauben. Außerdem sind sie recht einfach herstellbar, z.B. auf einer Drehmaschine im Gewindeschneidzyklus und Benutzung einer Werkzeugeinheit zur Unrundbearbeitung, wie der hier vorgestellten. Daneben können Doppelschraubgetriebe in einer Drehrichtung als selbsthemmend ausgelegt werden, so daß z.B. im Falle eines Maschinencrashs die vom Futter mitgerissene Werkzeugaufnahme nicht den internen Antrieb des Revolvers zerstören kann.

Für die praktische Ausführung des ungleichförmig übersetzenden Getriebes sind innerhalb gewisser Vorgaben konstruktive Spielräume gegeben. Auf der Grundlage geradzahliger Wälzkreisdurchmesserverhältnisse besteht so die Möglichkeit zur Erhöhung oder Absenkung der Schwing- bzw. Taumelfrequenz der Werkzeugaufnahme gegenüber der Drehzahl des Antriebs. Daneben ist das Getriebe als Planetengetriebe, bzw. als Getriebe aus Hohlrad und Planetenrad herstellbar, womit ein zu weites Auskragen der Werkzeugeinheit aus der Antriebsachse vermeidbar ist.

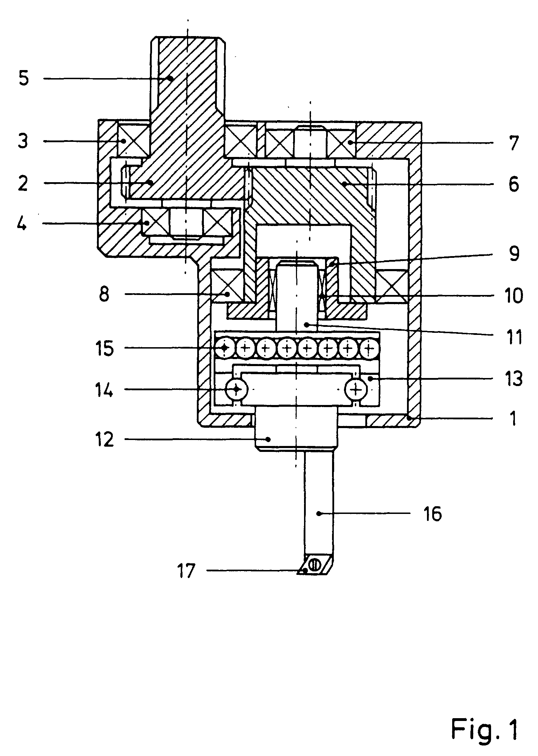

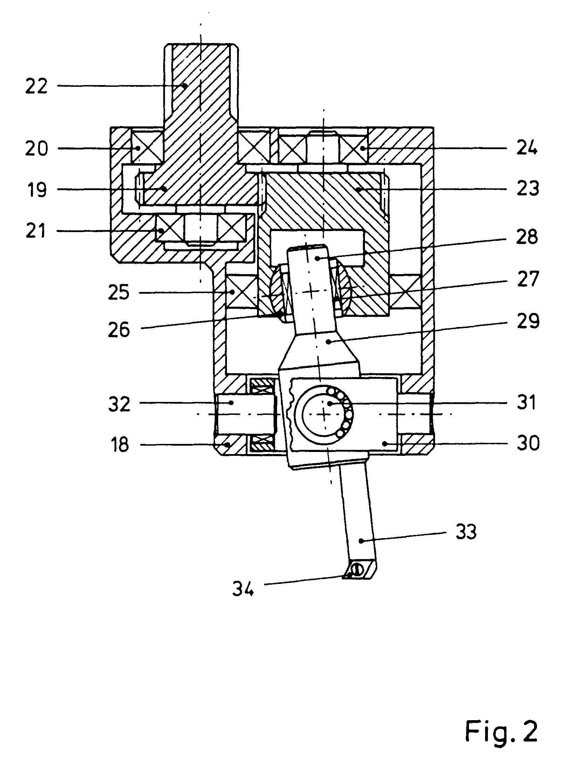

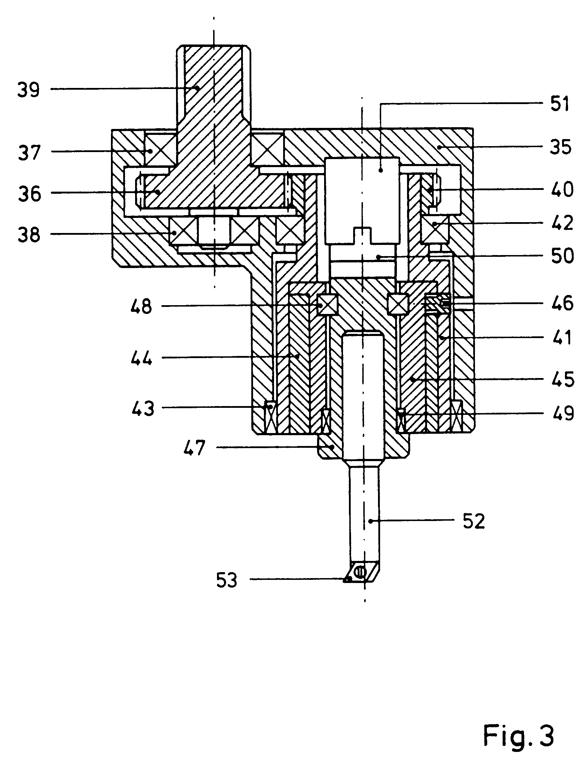

Weiterbildungen der Erfindung sollen im folgenden anhand der drei Zeichnungsfiguren näher erläutert werden. Die **Figur 1** zeigt eine erfindungsgemäße Werkzeugeinheit für die Aufrüstung auf den Revolver einer Drehmaschine, die Figuren **2** und **3** jeweils eine ähnliche Werkzeugeinheit mit einer anderen Lagerung der Werkzeugaufnahme. Für die Darstellungen wurden mehr schematisch aufzufassende Ausführungsbeispiele einer Werkzeugeinheit gewählt, um das Wesen der Erfindung leichter verständlich zu machen. Die gewählten Dimensionierungen entsprechen daher der zeichnerischen Vereinfachung. Ebenso wurden Bauteilaufteilungen, wie sie für die Montage erforderlich sind, nicht berücksichtigt. Kleinteile, wie z.B. Schrauben, Sicherungsringe, Abdichtungen und dergleichen wurden aus den gleichen Gründen weggelassen, da dem durchschnittlich gebildeten Fachmann die Ausführung einer praktischen Gestaltung ohnehin klar sein dürfte. Die Werkzeugeinheiten sind mit der überwiegenden Anzahl ihrer Bauteile geschnitten dargestellt.

Die in **Fig. 1** gezeigte Werkzeugeinheit besteht aus einem Gehäuse **1**, in welchem ein Antriebsritzel 5 mittels zweier Wälzlager **3,4** drehbar gelagert ist. Die im Gehäuse befindliche Seite des Antriebsritzels ist mit einem Zahnrad **2** versehen, während die andere Seite eine Verzahnung besitzt, welche für die Ankopplung an den maschinenseitigen Antrieb vorgesehen ist. Die weiteren Verbindungselemente zur maschinenseitigen Schnittstelle wurden weggelassen. Das Zahnrad **2** greift in die Verzahnung eines in den Wälzlagern **7,8** drehbar gelagerten Trieblings **6** ein, sodaß seine Drehbewegung auf ihn übertragen wird. In einer praktischen Bauausführung sind diese Zahnräder austauschbar in Gestalt von Wechselradsätzen vorhanden, wobei die konstruktive Freiheit besteht, durch Festlegung der Zahnzahlverhältnisse die interne Übersetzung festzulegen, bzw. durch die Verwendung unrunder Komplementärzahnräder die für die Herstellung einer bestimmten Kontur erforderliche Geschwindigkeitsvariation der Werkzeugspitze zu verwirklichen. An dem Triebling **6** ist ein radial verstellbarer Lagerblock **9** als Exzenterlager befestigt, wobei sowohl die Elemente zur Befestigung selbst, als auch zur Einstellung und Ablesung des exzentrischen Verschubs nicht gezeigt werden. In diesem Zusammenhang wird vorgeschlagen, das Gehäuse **1** mit einem abdeckbaren Durchbruch zu versehen, um z.B. mit einem Einstellschlüssel an den Lagerblock zu gelangen, bzw. den Verstellwert ablesen zu können. Innerhalb des Lagerblocks ist ein Wälzlager in Gestalt eines Nadellagers **10** eingezeichnet, welches einen runden Zapfen **11** so aufnimmt, daß die rotative Bewegung des Trieblings **6** und des Lagerblocks **9** von der Werkzeugaufnahme **12** abgekoppelt und lediglich seine exzentrische Bewegung übertragen wird. Dabei wird die als Schwingkopf arbeitende Werkzeugaufnahme **12**, welche hier zusammen mit einem Kreuzrahmen **13** als Kreuzschieber gestaltet ist, in der Radialebene sowohl in der x- als auch in der y-Achse ausgelenkt, wobei die Größe ihrer Auslenkung vom Exzenterwert abhängt und ihre Bewegungsbahn stets auf einem Kreis verläuft. Damit die Werkzeugaufnahme ihre Aufgabe zuverlässig erfüllen kann, ist sie mittels einer steifen Wälzlagerung in dem Kreuzrahmen **13** gegen das Gehäuse abgestützt. Die Wälzkörperkolonnen **14,15** sind in der Zeichnung als aus Kugeln bestehend dargestellt. In der praktischen Ausführung kann auf noch steifere Alternativen zurückgegriffen werden, z.B. einer Rollenlagerung mit kreuzweise eingelegten Rollen. Die Lagerung des Kreuzrahmens hat zwar nur relativ kurze Rollwege, jedoch hohe Schwingfrequenzen zu verkraften. Sie muß möglichst spielfrei gestaltet sein, um eine hohe Formtreue der zu fertigenden Kontur zu erzielen. In der Werkzeugaufnahme **12** ist eine Bohrstange **16** für die Fertigung einer am Werkstück innen liegenden Kontur eingesetzt. Auf ihrem vorderen Ende ist eine auswechselbare Wendeschneidplatte **17** aufgeschraubt. Die Position der Schneidenspitze wurde dabei so gewählt, daß sie genau auf der Mittelachse der Werkzeugaufnahme zu liegen kommt. Dadurch sind die auf die Werkzeugaufnahme wirkenden Hebelkräfte klein. Diese Gestaltung ist jedoch nicht zwingend, da die konturtreue Bahn der Werkzeugspitze auch in jeder anderen Position gewährleistet ist.

Für die Fertigung von Außenkonturen muß die Schneidenrichtung der gezeigten Wendeschneidplatte um 180° verdreht werden, z.B. durch entsprechend gedrehtes Umsetzen der Bohrstange in den Werkzeugkopf, oder durch Montage eines radial angeordneten Werkzeughalters wie er für die Außenbearbeitung üblich ist.

In die gezeigte Werkzeugeinheit sind im Bereich des Exzenterlagers zusätzliche fest oder verstellbar angeordnete Massen integrierbar, um die durch den exzentrischen Umlauf begründeten Massenkräfte zu kompensieren. Tatsächlich sind die im Betrieb auftretenden Massenkräfte nicht sehr hoch, da der Umlaufkreis im Prinzip relativ klein ist. Im dargestellten Beispiel steht der Werkzeugkopf etwa 3 mm außermittig, sodaß der Durchmesser des Schwingkreises ungefähr 6 mm beträgt. Mit einer derartigen Einstellung wäre immerhin ein Sechskant einer Schlüsselweite von etwa 78 mm herstellbar.

Das schematische Beispiel in **Fig.2** ist in seiner Darstellungsweise an die der **Fig.1** angelehnt. Verschiedene Gestaltungen und Dimensionierungen wurden übernommen. Die gezeigte Werkzeugeinheit besteht aus einem Gehäuse **18**, in welchem ein Antriebsritzel **22** mittels der beiden Wälzlager **20,21** drehbar gelagert ist. Die in das Gehäuse eintauchende Seite des Antriebsritzels **22** ist mit einem Zahnrad **19** versehen, während die aus dem Gehäuse herauszeigende Seite eine Verzahnung besitzt, welche für die Ankopplung an den maschinenseitigen Antrieb vorgesehen ist. Die weiteren Verbindungselemente zur maschinenseitigen Schnittstelle wurden weggelassen. Das Zahnrad **19** greift in die Verzahnung eines mittels der Wälzlager **24,25** drehbar gelagerten Trieblings **23** ein, sodaß seine Drehbewegung auf ihn übertragen wird. In einer praktischen Bauausführung sind diese Zahnräder austauschbar in Gestalt von Wechselradsätzen vorhanden, wobei die konstruktive Freiheit besteht, durch Festlegung der Zahnzahlverhältnisse die interne Übersetzung festzulegen, bzw. durch die Verwendung unrunder Komplementärzahnräder die für die Herstellung einer bestimmten Kontur erforderliche Geschwindigkeitsvariation der Werkzeugspitze zu verwirklichen. An dem Triebling **23** ist ein nicht im einzelnen gezeigter radial verstellbarer Lagerblock als Exzenterlagerung befestigt, welcher eine Aufnahme in Gestalt einer inneren Kugelzone für eine kugelige Lagerschale **26** besitzt. Dabei werden sowohl die Elemente zur Befestigung des Lagerblocks selbst, als auch zur Einstellung und Ablesung des exzentrischen Verschubs nicht gezeigt. Diesbezüglich wird vorgeschlagen, das Gehäuse 18 mit einem abdeckbaren Durchbruch zu versehen, um z.B. zum Zwecke der Einstellung mit einem Schlüssel an das Exzenterlager gelangen, bzw. den Verstellwert ablesen zu können. Innerhalb der Lagerschale **26** ist ein Wälzlager in Gestalt eines Nadellagers **27** eingezeichnet, welches einen runden Zapfen **28** so aufnimmt, daß die rotative Bewegung des Trieblings **23** und der exzentrischen Kugelschale **26** von der Werkzeugaufnahme **29** abgekoppelt und lediglich seine exzentrische Bewegung übertragen wird. Dabei wird die als Taumelkopf arbeitende Werkzeugaufnahme **29**, welche hier zusammen mit einem teilweise abgebrochen gezeichneten Ring **30** und versetzten Zapfenpaaren **31** und **32** in Wälzlagern kardanisch aufgehängt ist, mit seinen Extremitäten in einem um 180° gegeneinander phasenverschobenen, gleichsinnigen Umlauf entlang einer Kreisbahn bewegt. In der Werkzeugaufnahme **29** ist eine Bohrstange **33** für die Fertigung einer am Werkstück innen liegenden Kontur eingesetzt. Auf ihrem vorderen Ende ist eine auswechselbare Wendeschneidplatte **34** aufgeschraubt. Die Position der Schneidenspitze wurde dabei so gewählt, daß sie genau auf der Mittelachse der Werkzeugaufnahme zu liegen kommt. Dadurch sind die auf die Werkzeugaufnahme wirkenden Hebelkräfte klein. Diese Gestaltung ist insofern bei dieser Bauform besonders empfohlen, da sie zu den geringsten axialen Bewegungsüberlagerungen der Werkzeugspitze führt. Die Werkzeugspitze wird nämlich bei beliebigen Bahnen immer auf einer im Raum liegenden Kugelkalotte bewegt, deren Mittelpunkt mit dem der kardanischen Aufhängung übereinfällt. Die sich daraus ergebenden Verzerrungen der Kontur nehmen mit größer werdendem Abstand von der Zentralachse der Werkzeugeinheit immer mehr zu. Generell sind sie ihrer Größe nach durch eine Berücksichtigung bei der Auslegung des ungleichmäßig übertragendes Getriebes kompensierbar. Allerdings muß dann ein bogenförmig gewellter Anschnitt bzw. Auslauf der Bearbeitungsstrecke am Werkstück in Kauf genommen werden. Des weiteren ist zu berücksichtigen, daß sich bei dieser Bauform der Betrag des Überstandes der Werkzeugspitze auf den von ihr beschriebenen Kreisdurchmesser und damit auf die gefertigte Kontur auswirkt. Daher muß z.B. die Länge der Bohrstange bzw. die Position der Werkzeugspitze immer genau eingehalten werden. Andererseits ist damit die Möglichkeit gegeben, mittels bewußt anders eingestellter Kraglängen ohne die innere Verstellung des exzentrischen Lagers andere Konturabmessungen zu fertigen. Gleichwertige Verstellmöglichkeiten sind ferner durch eine Verschiebung der kardanischen Lagerebene gegen die Ebene des Exzenterlagers realisierbar.

Mit der gezeigten Werkzeugeinheit können in begrenztem Umfang auch Außenbearbeitungen durchgeführt werden, wenn die radialen Abstände der Schneidenspitze des Werkzeugs nicht zu groß sind. Dabei muß die Schneidenrichtung der gezeigten Wendeschneidplatte um 180° verdreht werden, z.B. durch entsprechend gedrehtes Umsetzen der Bohrstange in den Werkzeugkopf.

Ein Vorteil der hier vorgeschlagenen Bauform besteht darin, daß die im Betrieb auftretenden Massenkräfte von vorneherein sehr klein sind, da der Durchmesser des jeweiligen Umlaufkreises von den Extremitäten des Werkzeugkopfes zur Mitte der kardanischen Lagerung hin beständig abnimmt. Außerdem sind die umlaufenden Massen durch ihre um 180° phasenverschobene Lage ohnehin teilweise kompensiert. Zusätzlich sind in die gezeigte Werkzeugeinheit im Bereich des Exzenterlagers fest oder verstellbar angeordnete Massen integrierbar, um eine noch bessere Kompensation der durch den exzentrischen Umlauf begründeten Massenkräfte zu erreichen.

Eine weitere Variante der erfindungsgemäßen Vorrichtung wird in **Fig.3** gezeigt, wobei wie zuvor zwecks besserer Vergleichbarkeit die Dimensionierung an die Zeichnungsfiguren **1** und **2** angelehnt wurde. Zur Ankopplung der Werkzeugeinheit an den maschinenseitigen Antrieb dient ein Ritzel **39**, welches mit Wälzlagern **37,38** im Gehäuse **35** gelagert ist. Die Verzahnung seines Zahnrades **36** greift in die Verzahnung eines zweiten Zahnrades **40** ein, welches auf eine Hohlspindel **41** aufgepreßt ist. Die Hohlspindel ist ihrerseits mit einem Schulterlager **42** und einem Rollenlager **43** im Gehäuse **35** drehbar gelagert. Sie nimmt einen Satz Exzenterhülsen **44,45** auf, welche gegenphasig gegeneinander mittels eines Zahnrades **46** verdrehbar sind, um den Durchmesser des Umlaufkreises des Werkzeugs einstellen zu können. Dabei ist das Zahnrad **46** ein normales Stirnrad, wohingegen die Verzahnungen an den Exzenterhülsen sogenannte Kronenverzahnungen sind.

Für den Zweck der Relativverdrehung der beiden Exzenterhülsen sind auch andere Stellelemente verwendbar, z.B. Schneckentriebe, Kegelräder, Stellschrauben, Differentialschrauben oder dergleichen. Mittels der gegenseitigen Verdrehung der beiden Exzenterhülsen wird eine in radialer Richtung geradlinige Justierung der Schneidenspitze ermöglicht. Der Grad der Verstellung ist auf einer Skalierung der sich dabei bewegenden Bauteile ablesbar. Besonders einfach ist eine stirnseitige Skalierung auf den nach außen zeigenden Ringflächen der Exzenterhülsen zu verwirklichen, indem auf der Stirnfläche der einen Exzenterhülse eine Referenzmarke in Gestalt eines Strichs, und auf der anderen eine Teilung mit Zahlenwerten angebracht wird. Diese Skalierung bietet wegen ihrer gegenphasigen Verdrehrichtung gleichzeitig auch eine erhöhte Ablesegenauigkeit.

Die beiden Exzenterhülsen erfordern sowohl gegeneinander als auch zur Hohlspindel eine spielfreie Fixierung, um im Betrieb das Auftreten von Schwingungen sicher zu unterbinden. Da die geforderte Spielfreiheit mit zylindrischen Passungen bei starren Bauteilen nur schwierig erreichbar ist, wird diesbezüglich empfohlen, mindestens eine der Passungen konisch zu gestalten und die entsprechende Exzenterhülse z.B. als geschlitzte Spannhülse auszuführen. Durch axiales Spannen ist dann die aus den Elementen Hohlspindel, äußerer und innerer Exzenterhülse bestehende Einheit zu einem festen Block verspannbar. Als Alternative wird angeboten, die äußere Exzenterhülse als hydraulische Spannhülse zu verwirklichen, welche mittels einer auf das hydraulische Medium wirkenden Druckschraube aufweitbar ist.

Die innenliegende Exzenterhülse **45** nimmt über ein Schulterlager **48** und ein Nadellager **49** eine Werkzeugaufnahme **47** auf, welche mittels einer Oldham-Kupplung **50** und einem Poller **51** verdrehfest gegen das Gehäuse gehalten wird. Anstelle der Oldham-Kupplung sind auch andere Ausgleichskupplungen für parallele Wellenverlagerungen verwendbar, z.B. ein Metallbalg, eine Schmidt-Kupplung, eine Helicoflex-Kupplung oder dergleichen.

In die Werkzeugaufnahme **47** ist eine Bohrstange **52** für die Bearbeitung einer unrunden Innenkontur eingesetzt. Die übliche Verklemmung der Bohrstange in der Werkzeugaufnahme mittels eines Gewindestiftes ist in der geschnittenen Darstellung nicht zu sehen. Auf der Bohrstange ist eine Wendeschneidplatte **53** mit einer Schraube befestigt. Falls die Bearbeitung einer unrunden Außenkontur beabsichtigt ist, muß die Bohrstange gegen einen entsprechenden Werkzeughalter ausgetauscht werden. Die Spitze der Wendeschneidplatte ist dann um 180° versetzt angeordnet.

Mit der Erfindung werden somit ein Verfahren und entsprechende Vorrichtungen zur Durchführung des Verfahrens zur Verfügung gestellt, womit sowohl exzentrische Zapfen und Bohrungen als auch die unterschiedlichsten Außen- und Innenkonturen an Werkstücken in kürzester Bearbeitungszeit und mit hoher Genauigkeit herstellbar sind. Dabei ist während des Zerspanungsvorgangs sowohl eine Schnittaufteilung als auch eine enge Tolerierung der Maße realisierbar. Die Vorrichtungen sind sehr kompakt und kostengünstig herstellbar und können auf einer Anzahl verschiedener Maschinen aufgerüstet werden.

## Patentansprüche

1. Verfahren für die Bearbeitung von Werkstücken zur Erzielung unrunder Innen- und/oder Außenkonturen, wobei das zu bearbeitende Werkstück mit konstanter Winkelgeschwindigkeit um eine ortsfeste Achse rotiert, während das Werkzeug ohne selbst zu rotieren auf einer Kreisbahn umlaufend axial verfahren wird, welche mindestens während des letzten Schnitts den Inkreis der herzustellenden Kontur von außen und den Umkreis von innen tangiert und deren Mittelpunkt dabei in der Mitte zwischen In- und Umkreis gelegen ist, wobei die Drehgeschwindigkeit des Werkstücks und die Umlaufgeschwindigkeit des Werkzeugs auf seiner Kreisbahn elektronisch miteinander synchronisiert sind und die Bahngeschwindigkeit des Werkzeugs während des Umlaufs so verändert wird, daß durch die ortsfeste Rotation des Werkstücks und die zeitliche Position des Werkzeugs auf seiner Kreisbahn die gewünschte Formgestalt bestimmt wird,
**dadurch gekennzeichnet,**
**daß** die gewünschte Formgestalt in mehreren Bearbeitungsgängen mit einer auf eine Werkzeugstation einer CNC-gesteuerten Bearbeitungsmaschine aufgerüsteten angetriebenen Vorrichtung hergestellt wird, wobei der Mittelpunkt der Kreisbahn auf welcher das Werkzeug geführt wird nach jedem Bearbeitungsgang mit einem Betrag radial gegen die Bearbeitungsfläche zugestellt wird und dieser Zyklus so lange wiederholt wird, bis das endgültige Maß erreicht ist.

2. Auf eine Werkzeugstation einer CNC-gesteuerten Bearbeitungsmaschine aufrüstbare Vorrichtung zur Durchführung das Verfahrens gemäß Anspruch 1 mit einem Werkzeug (17, 34, 53), dessen Schneidenspitze entlang einer Kreislinie mit wechselnder Bahngeschwindigkeit bewegbar geführt ist, wobei das Werkzeug an einer Werkzeugaufnahme (12, 29, 47) befestigt ist, wobei in die Vorrichtung ein Getriebe (2, 6, 19, 23, 36, 40) zur Erzeugung der wechselnden Bahngeschwindigkeit, die Werkzeugaufnahme und eine Ausgleichskupplung integriert sind, wobei die Werkzeugaufnahme gegen das Gehäuse (1, 18, 35) der Vorrichtung über die Ausgleichskupplung (13, 14, 15, 30-32, 50-51) drehfest abgestützt ist, welche ihrerseits auf einer koaxial zur Mittelachse des Antriebs (6, 23, 40) liegenden Kreisbahn bewegbar ist und dabei Parallelverschiebungen und/oder Schwenkbewegungen der Mittelachse der Werkzeugaufnahme in Gestalt von koaxial zur Mittelachse des Antriebs liegenden Kreisbahnen erlaubt, wobei axiale Relativbewegungen der Werkzeugaufnahme zum Gehäuse der Vorrichtung mittels einer Wälzlagerung (14, 15) unterbunden sind.

3. Vorrichtung gemäß Anspruch 2, **dadurch gekennzeichnet, daß** die Ausgleichskupplung als Kreuzschieber (13,14,15) ausgebildet ist.

4. Vorrichtung gemäß Anspruch 2, **dadurch gekennzeichnet, daß** die Ausgleichskupplung in Gestalt einer kardanischen Aufhängung (30,31,32) realisiert ist.

5. Vorrichtung gemäß Anspruch 2, **dadurch gekennzeichnet, daß** die Ausgleichskupplung als Oldham-Kupplung (50,51) Wellbalg, Helicoflex-, Schmidt-Kupplung oder dergleichen ausgebildet ist, und die axiale Relativbewegung der Werkzeugaufnahme (47) zum Gehäuse (35) der Werkzeugeinheit mittels eines Wälzlagers (42,48) unterbunden ist.

6. Vorrichtung gemäß Anspruch 2, **dadurch gekennzeichnet, daß** der Durchmesser des von der Schneidenspitze des Werkzeugs (17,34,53) während des Betriebs beschriebenen Kreises in feiner Auflösung verstellbar ist.

7. Vorrichtung gemäß einem der Ansprüche 2, 3, 4 und 6, **dadurch gekennzeichnet, daß** die Werkzeugaufnahme (12,29) in einen Lagerzapfen (11,28) ausläuft, welcher mittels eines Lagers (10,27) in einem radial bzw. exzentrisch einstellbaren Lagerblock (9) gelagert ist.

8. Vorrichtung gemäß Ansprüchen 2, 4 oder 6, **dadurch gekennzeichnet, daß** die Werkzeugaufnahme als Taumelkopf (29) ausgebildet und unter einem verstellbaren Winkel relativ zu dem rotierenden Triebling (23) mit einer Lagerschale (26) in Kugelform bzw. Kugelzonenform in dem exzentrisch verstellbaren Lagerblock schwenkbar gelagert ist.

9. Vorrichtung gemäß Ansprüchen 2, 5 oder 6, **dadurch gekennzeichnet, daß** die Werkzeugaufnahme (47) in mindestens einer winkelmäßig gegenüber der rotierbaren Hohlspindel (41) verstellbaren Exzenterhülse gelagert ist, um die radiale Position der Werkzeugspitze einstellbar zu machen.

10. Vorrichtung gemäß Anspruch 9, **dadurch gekennzeichnet, daß** die Werkzeugaufnahme (47) in einem Exzenterhülsenpaar (44,45) gelagert und das Exzenterhülsenpaar mittels eines Stelltriebs gegenphasig gegeneinander verdrehbar ist.

11. Vorrichtung gemäß einem der Ansprüche 9 oder 10, **dadurch gekennzeichnet, daß** mindestens eine Exzenterhülse mit einer konischen Innen- und/oder Außenfläche und einer wahlweisen Schlitzung mittels einer Axialbewegung gegen mindestens eine zweite Hülse verspannbar ist.

12. Vorrichtung gemäß Anspruch 10, **dadurch gekennzeichnet, daß** die äußere Exzenterhülse als hydraulische Spannhülse ausgebildet ist.

13. Vorrichtung gemäß einem der Ansprüche 10 bis 12, **dadurch gekennzeichnet, daß** der Stelltrieb aus einer mindestens partiellen Verzahnung der beiden Exzenterhülsen (44,45) (z.B. Kegelrad- oder Kronenverzahnung) und einem mit beiden Exzenterhülsen in Eingriff befindlichen Ritzel (46) gebildet ist.

14. Vorrichtung gemäß einem der Ansprüche 9 bis 13, **dadurch gekennzeichnet, daß** mindestens eine Exzenterhülse und eine weitere benachbarte Hülse auf ihrer nach außen zeigenden Stirnseite mit einer gegenseitigen Skalierung versehen sind.

15. Vorrichtung gemäß einem der vorgenannten Ansprüche, **dadurch gekennzeichnet, daß** das Getriebe zur Erzeugung wechselnder Bahngeschwindigkeiten des Werkzeugs ein Rädergetriebe (2/6, 19/23, 36/40) mit unrunden komplementären Wälzkreisen ist.

16. Vorrichtung gemäß Anspruch 15, **dadurch gekennzeichnet, daß** eines der Räder ein Hohlrad und das andere ein Planetenrad ist.

17. Vorrichtung gemäß Ansprüchen 15 oder 16, **dadurch gekennzeichnet, daß** das Getriebe ein Doppelschraubgetriebe ist.

18. Vorrichtung gemäß einem der Ansprüche 2 bis 17, **dadurch gekennzeichnet, daß** mindestens einer der Wälzkreise des ungleichförmig übersetzenden Getriebes mindestens partiell einer Kardioide ähnlich ist, und der unstet verlaufende Kurvenabschnitt durch einen Kreisbogenabschnitt ersetzt ist, welcher tangential in den beiderseitigen Kurvenrest übergeht.

19. Vorrichtung gemäß einem der Ansprüche 2 bis 18, **dadurch gekennzeichnet, daß** das Gehäuse (1,18,35) und die Antriebswelle z.B. in Gestalt eines Ritzels (5,22,39) oder dergleichen kompatibel zu den üblichen maschinenseitigen Schnittstellen gestaltet sind, um so z.B. auf die angetriebene Station des Revolvers einer Drehmaschine aufrüstbar zu sein.

20. Vorrichtung gemäß einem der Ansprüche 2 bis 18, **dadurch gekennzeichnet, daß** die Antriebswelle kompatibel zu den üblichen maschinenseitigen Schnittstellen von Spindeln an Fräsmaschinen (z.B. Steilkegel SK 30, 40, 50 und dergleichen) gestaltet ist und das Gehäuse (1,18,35) über eine Drehmomentstütze gegen die Spindellagerung oder das Maschinenbett verfügt.

## Claims

1. A process for machining unround inner and/or outer contours on a workpiece, whereas said workpiece is rotated with constant angular speed around a stationary workpiece axis, while the work tool is moved axially describing a circular orbit without own rotation, wherein said circular orbit at least at the last cutting pass when from the outside is tangential to the inner circumference of the desired contour, and when from the inside is tangential to the outer circumference of the desired contour, wherein the axis of said orbit lies half-way between said workpiece contour inner circumference and outer circumference, wherein the rotational speed of the workpiece and the orbiting speed of the work tool on it's orbiting path are synchronized electronically and the orbiting speed of the work tool during its orbit is so adjusted, that the desired contour is defined by the stationary rotation of the workpiece and the actual position of the work tool in its circular motion, **characterized in that** the desired contour is produced in multiple processing steps, using a driven device on a tool station of a CNC-controlled machine, wherein the tool orbiting centre after each processing step is advanced an amount radially against the surface being processed, and said process steps are repeated until the final measure is achieved.

2. A device, mountable to a tool station of a CNC-controlled machine for carrying out the process according to claim **1,** comprising a tool **(17, 34, 53)** of which the cutting tip is guided along a circle line with changing orbital speed, wherein the tool is fixed on a work tool receptable **(12, 29, 47),** wherein a gear unit **(2, 6, 19, 23, 35, 40)** generating the changing orbital speed, the work tool receptable and a floating coupling are integrated within the device, wherein the work tool receptable is supported without rotational play against the housing **(1, 18, 40)** of the device using the floating coupling **(13, 14, 15, 30-32, 50-51),** which itself is moveable along a circle line coaxially to the centre axis of the drive **(6, 23, 40),** the floating coupling allowing parallel displacements and/or tumble movements of the work tool receptable centre axis in the form of circular orbits coaxially to the drive centre axis, wherein axial relative movements between the work tool receptable and the housing are prevented by means of a roller bearing **(14, 15).**

3. Device according to claim **2, characterized in that** the floating coupling is a cross-slide unit **(13, 14, 15).**

4. Device according to claim **2, characterized in that** the floating coupling is realized as a cardanic coupling **(30, 31, 32).**

5. Device according to claim **2, characterized in that** the floating coupling is designed as Oldham coupling **(50, 51),** corrugated bellows, Helicoflex coupling, Schmidt coupling or the like, and wherein the axial relative movement of the work tool receptable **(47)** with respect to the housing **(35)** of the device is prevented via a roller bearing **(42, 48).**

6. Device according to claim **2, characterized in that** the orbit diameter of the cutting tool tip **(17, 34, 53)** described under work, is adjustable with fine resolution.

7. Device according to one of the claims **2, 3, 4** and **6, characterized in that** the work tool receptable **(12, 29)** extends to a bearing pin **(11, 28),** which is mounted by means of a bearing **(10, 27)** in a radially or eccentrically adjustable mounting block **(9).**

8. Device according to claims **2, 4** or **6, characterized in that** the work tool receptable is formed as a tumble head **(29)** and is pivotably mounted with a spherical or spherical zone shaped mounting shell (26) in the eccentrically adjustable mounting block with an adjustable angle relative to the rotating driver **(23)** axis.

9. Device according to claims **2, 5** or **6, characterized in that** the work tool receptable **(47)** is mounted in at least one eccentric sleeve, which is angularly adjustable with respect to a rotatable hollow spindle **(41),** in order to make adjustable the radial position of the work tool tip.

10. Device according to claim **9, characterized in that** the work tool receptable **(47)** is mounted in an eccentric sleeve pair **(44, 45)** and wherein the eccentric sleeve pair is rotatable inversely phased against each other via an adjustment drive.

11. Device according to one of the claims **9** or **10, characterized in that** at least one eccentric sleeve has a conical inner and/or outer surface and optionally a slit or split taper, and is tensionable by axial sliding against at least a second sleeve.

12. Device according to claim **10, characterized in that** the outer eccentric sleeve is a hydraulic clamping sleeve.

13. Device according to one of the claims **10** to **12, characterized in that** the adjustment drive is consisting of at least a partial toothing on both eccentric sleeves **(44, 45)** (e.g. a bevel gear toothing or a crown gear toothing), and a pinion **(46)** in engagement with both eccentric sleeves.

14. Device according to one of the claims **9** to **13, characterized in that** at least one eccentric sleeve and one adjacent sleeve are supplied with a reciprocal scale on their outwardly exposed ends.

15. Device according to one of the aforementioned claims, **characterized in that** the transmission used for the generation of changing tool orbit speeds is a wheel gear unit **(2/6, 19/23, 36/40)** with unround complimentary roller paths.

16. Device according to claim **15, characterized in that** one of the gear wheels is a ring gear and the other is a planet gear.

17. Device according to claims **15** or **16, characterized in that** the gear unit is a double helical gear.

18. Device according to one of the claims **2** to **17, characterized in that** at least one of the roller paths of the uneven transmitting gear drive is similar to a cardioidic curve of which the pointed section is replaced by an arc, which transitions tangentially into both sides of the residual curve.

19. Device according to one of the claims **2** to **18, characterized in that** the housing **(1, 18, 35)** and the input shaft e.g. in the shape of a pinion **(5, 22, 39)** or the like are designed to be compatible with the conventional machine interfaces, e.g. in order to be used on a driven tool position of a turning lathe revolver.

20. Device according to one of the claims **2** to **18, characterized in that** the drive shaft is designed to be compatible with the conventional machine interfaces of milling machine spindles (e.g. steep cone coupling SK 30, 40, 50 and the like), and the housing is supplied with a torque support against the spindle socket or the machine frame.

## Revendications

1. Procédé d'usinage de pièces afin de parvenir à des contours intérieurs et/ou extérieurs non ronds, la pièce à usiner tournant à vitesse angulaire constante autour d'un axe fixe, tandis que l'outil - sans tourner lui même - est déplacé axialement de manière à circuler sur une trajectoire circulaire qui, au moins durant la dernière coupe, touche de l'extérieur le cercle inscrit du contour à produire et touche de l'intérieur le cercle circonscrit, et dont le centre est situé, durant cela, au milieu entre le cercle inscrit et le cercle circonscrit, la vitesse de rotation de la pièce et la vitesse de rotation de l'outil sur sa trajectoire circulaire étant synchronisées de façon électronique l'une avec l'autre et la vitesse de trajectoire de l'outil étant changée durant la circulation de telle manière que la forme souhaitée est déterminée par la rotation fixe de la pièce et par la position temporelle de l'outil sur sa trajectoire circulaire, **caractérisé par le fait que** la forme souhaitée est produite en plusieurs opérations d'usinage avec un dispositif entraîné monté sur une station d'outil d'une machine d'usinage à commande CNC, le centre de la trajectoire circulaire sur laquelle l'outil est guidé étant avancé, après chaque opération d'usinage, avec une valeur (pas) radialement contre la surface d'usinage, et ce cycle étant répété jusqu'à tant que la mesure définitive soit atteinte.

2. Dispositif qui peut être monté sur une station d'outil d'une machine d'usinage à commande CNC et qui est destiné à la mise en oeuvre du procédé selon la revendication 1, comprenant un outil (17, 34, 53) dont la pointe de tranchant est guidée de manière à pouvoir être déplacée le long d'un cercle à une vitesse variable de trajectoire, l'outil étant fixé sur un logement d'outil (12, 29, 47), dans le dispositif étant intégrés un engrenage (2, 6, 19, 23, 36, 40) destiné à générer la vitesse variable de trajectoire, le logement d'outil et un accouplement compensateur, ledit logement d'outil étant appuyé solidaire en rotation contre le boîtier (1, 18, 35) du dispositif par l'accouplement compensateur (13, 14, 15, 30-32, 50-51) qui, de son côté, peut être déplacé sur une trajectoire circulaire située de façon coaxiale à la ligne centrale de l'entraînement (6, 23, 40), et qui, lors de cela, permet des déplacements parallèles et/ou des mouvements de pivotement de la ligne centrale du logement d'outil sous forme de trajectoires circulaires situées de façon coaxiale à la ligne centrale de l'entraînement, des mouvements relatifs axiaux du logement d'outil par rapport au boîtier du dispositif étant empêchés au moyen d'un montage sur palier à roulement (14, 15).

3. Dispositif selon la revendication 2, **caractérisé par le fait que** l'accouplement compensateur est réalisé comme coulisse en croix (13, 14, 15).

4. Dispositif selon la revendication 2, **caractérisé par le fait que** l'accouplement compensateur est réalisé sous forme d'une suspension à la Cardan (30, 31, 32).

5. Dispositif selon la revendication 2, **caractérisé par le fait que** l'accouplement compensateur est réalisé comme accouplement Oldham (50, 51), soufflet ondulé, accouplement Hélicoflex, accouplement de Schmidt ou semblable, et que le mouvement relatif axial du logement d'outil (47) au boîtier (35) de l'unité d'outil est empêché au moyen d'un palier à roulement (42, 48).

6. Dispositif selon la revendication 2, **caractérisé par le fait que** le diamètre du cercle décrit par la pointe du tranchant de l'outil (17, 34, 53) durant le fonctionnement peut être réglé en résolution fine.

7. Dispositif selon l'une des revendications 2, 3, 4 et 6, **caractérisé par le fait que** le logement d'outil (12, 29) se termine dans un tourillon (11, 28) qui est logé au moyen d'un palier (10, 27) dans un bloc de logement (9) réglable de façon radiale ou bien excentrique.

8. Dispositif selon les revendications 2, 4 ou 6, **caractérisé par le fait que** le logement d'outil est réalisé comme tête chancelante (29) et est logé à pivotement, sous un angle réglable par rapport à l'élément moteur tournant (23) avec une coquille de coussinet (26) en forme sphérique ou bien en forme de zone de sphère, dans le bloc de logement réglable de façon excentrique.

9. Dispositif selon les revendications 2, 5 ou 6, **caractérisé par le fait que** le logement d'outil (47) est logé dans au moins une douille excentrique angulairement réglable par rapport à la broche creuse rotative (41), pour rendre réglable la position radiale de la pointe de l'outil.

10. Dispositif selon la revendication 9, **caractérisé par le fait que** le logement d'outil (47) est logé dans une paire de douilles excentriques (44, 45) et que la paire de douilles excentriques peut tourner l'une contre l'autre en opposition de phase au moyen d'un mécanisme d'entraînement de réglage.

11. Dispositif selon l'une des revendications 9 ou 10, **caractérisé par le fait que** du moins une douille excentrique avec une surface conique intérieure et/ou extérieure et une fente facultative peut être serrée au moyen d'un mouvement axial contre au moins une deuxième douille.

12. Dispositif selon la revendication 10, **caractérisé par le fait que** la douille excentrique extérieure est réalisée comme douille de serrage hydraulique.

13. Dispositif selon l'une des revendications 10 à 12, **caractérisé par le fait que** le mécanisme d'entraînement de réglage est formé d'une denture au moins partielle des deux douilles excentriques (44, 45) (par exemple denture à roues coniques ou à couronne) et d'un pignon (46) se trouvant en prise avec les deux douilles excentriques.

14. Dispositif selon l'une des revendications 9 à 13, **caractérisé par le fait que** du moins une douille excentrique et une autre douille voisine sont pourvues sur leur front montrant vers l'extérieur d'une échelle réciproque.

15. Dispositif selon l'une des revendications susmentionnées, **caractérisé par le fait que** l'engrenage destiné à générer des vitesses variables de trajectoire de l'outil est un train d'engrenages (2/6, 19/23, 36/40) avec des cercles primitifs de fonctionnement complémentaires non ronds.

16. Dispositif selon la revendication 15, **caractérisé par le fait que** l'une des roues est une roue à denture intérieure et l'autre roue est une roue planétaire.

17. Dispositif selon les revendications 15 ou 16, **caractérisé par le fait que** l'engrenage est un engrenage hélicoïdal double.

18. Dispositif selon l'une des revendications 2 à 17, **caractérisé par le fait que** du moins un des cercles primitifs de fonctionnement du mécanisme à rapport de transmission variable est semblable au moins partiellement à une cardioïde, et que la section de courbe s'étendant de façon discontinue est remplacée par un segment d'arc de cercle qui entre tangentiellement dans le reste de courbe situé de part et d'autre.

19. Dispositif selon l'une des revendications 2 à 18, **caractérisé par le fait que** le boîtier (1, 18, 35) et l'arbre menant, par exemple sous forme d'un pignon (5, 22, 39) ou semblable, sont réalisés de manière à être compatibles avec les interfaces usuelles situées du côté de la machine, afin de pouvoir être montés ainsi par exemple sur la station entraînée du revolver d'un tour.

20. Dispositif selon l'une des revendications 2 à 18, **caractérisé par le fait que** l'arbre menant est réalisé de manière à être compatible avec les interfaces usuelles du côté de la machine de broches sur des machines à fraiser (par exemple cônes rapides SK 30, 40, 50 et semblable), et que le boîtier (1, 18, 35) dispose d'un appui de couple contre le logement de la broche ou le banc de machine.
